# EUROPÄISCHE PATENTSCHRIFT

(11) **EP 3 765 764 B1**
(45) Veröffentlichungstag und Bekanntmachung des Hinweises auf die Patenterteilung: **09.10.2024**
(21) Anmeldenummer: 18727170.5
(22) Anmeldetag: 08.05.2018
(51) Int. Cl.: F16F 15/02

(54) **HOCHSPANNUNGSSYSTEM MIT EINER VORRICHTUNG ZUM AUSGLEICHEN EINER SCHWINGUNG UND/ODER EINER MATERIALSPANNUNG, DAS DEMENTENSPRECHENDEN VERFAHREN UND DAS COMPUTERPROGRAMMPRODUKT ZUR DURCHFÜHRUNG DES VERFAHRENS**
HIGH VOLTAGE SYSTEM WITH A DEVICE FOR COMPENSATING A VIBRATION AND/OR A MATERIAL TENSION, ITS CORRESPONDING METHOD AND THE COMPUTER PROGRAM TO CARRY OUT THE METHOD
SYSTÈME À HAUTE TENSION AVEC UN DISPOSITIF DE COMPENSATION D'UNE VIBRATION ET/OU D'UNE TENSION DE MATÉRIEL, SON PROCÉDÉ CORRESPONDANT ET LE PROGRAMME INFORMATIQUE POUR EXÉCUTER LE PROCÉDÉ

(43) Veröffentlichungstag der Anmeldung: 20.01.2021
(73) Patentinhaber: Siemens Energy Global GmbH & Co. KG, 81739 München (DE)
(72) Erfinder: BOSCHERT, Stefan, 85579 Neubiberg (DE); HAMMER, Thomas, 91126 Schwabach (DE); HEINRICH, Christoph, 86609 Donauwörth (DE); MALIK, Vincent, 80636 München (DE); METH, Jochen, 91448 Emskirchen (DE)
(86) Internationale Anmeldenummer: PCT/EP2018/061889
(87) Internationale Veröffentlichungsnummer: WO 2019/214809

(56) Entgegenhaltungen:
- EP-A1- 1 359 342
- WO-A1-2009/034950
- WO-A2-2008/034271
- US-A1- 2012 097 827

## Beschreibung

Die Erfindung betrifft ein Hochspannungssystem und ein Verfahren zum Ausgleichen einer Schwingung und/oder einer Materialspannung einer Komponente eines mit einem viskosen Medium gefüllten Hochspannungssystems.

Aus der EP 1 359 342 A1 ist eine Vorrichtung mit einem in einem Gehäuse beweglich gelagerten Kolben bekannt. Der Kolben ist an dem Gehäuse mittels einer Feder abgestützt. Ferner ist eine hydraulische Dämpfung offenbart.

Weiterer Stand der Technik ist aus der WO 2009/034950 A1 bekannt.

Die US 2012/097827 A1 beschreibt ein Verfahren zum rechnergestützten Konstruieren eines Dämpfers.

Aus der WO 2008/034271 A2, die als nächstliegender Stand der Technik betrachtet wird, gehen insbesondere gasisolierte gekapselte elektrische Schaltgeräte hervor. Es sind Ventilmodule offenbart, die eine Halbleiter-Serienschaltung umfassen, die koaxial von einem mit einem Isolierfluid befüllten Metallrohr umgeben ist.

Komponenten von Hochspannungssystemen, wie z.B. Transformatoren, sind typischerweise aus hochisolierenden und vorzugsweise korrosionsbeständigen Materialien gefertigt. Beim Transport, bei der Montage oder beim Betrieb kann es zu Schwingungen und/oder Eigenspannungen des Systems und/oder der einzelnen Komponenten des Systems kommen. Um solche Belastungen auszugleichen, können die Komponenten der Systeme in der Regel mittels einer Konstruktion aus elektrisch isolierendem Material, wie z.B. Holz oder Zellulose, im System befestigt und beispielsweise mittels Elementen, z.B. Klötzen aus elastischen Kunststoff oder Gummi als Stoßdämpfer, abgefedert werden. Für zusätzliche Schwingbelastungen, beispielsweise im Betrieb, können allerdings zusätzliche Dämpfungskomponenten notwendig sein. Als Beispiel ist ein Transformator auf einer Bohrplattform zu nennen, welcher starken zusätzlichen Belastungen aufgrund von Plattformschwingungen und/oder thermischer Ausdehnung des Materials ausgesetzt sein kann.

Es ist eine Aufgabe der Erfindung, ein Hochspannungssystem und ein Verfahren zu schaffen, die einen effizienteren und belastbareren Ausgleich von Schwingungen und/oder Materialspannungen und/oder Stoßbelastungen bei einem Transport für Komponenten eines Hochspannungssystems ermöglicht.

Die Aufgabe wird gelöst durch ein Hochspannungssystem mit den Merkmalen des Patentanspruchs 1, durch ein Verfahren des Patentanspruchs 14 und einem Computerprogrammprodukt gemäß Patentanspruch 15. Vorteilhafte Ausführungsformen und Weiterbildungen der Erfindung sind in den abhängigen Ansprüchen angegeben.

Ein erster Aspekt der Erfindung betrifft ein Hochspannungssystem mit einer Vorrichtung umfassend einen Kolben und ein Gehäuse zum Ausgleichen einer Schwingung und/oder einer Materialspannung einer Komponente eines mit einem viskosen Medium gefüllten Hochspannungssystems, wobei
a) ein erstes Endstück des Kolbens mit der Komponente gekoppelt ist,
b) ein zweites Endstück des Kolbens zumindest teilweise innerhalb des Gehäuses angeordnet und von diesem eingefasst ist,
c) der Kolben und das Gehäuse entlang einer Achse gegenläufig bewegbar sind,
d) das zweite Endstück des Kolbens mit einer Innenwand des Gehäuses mittels einer Feder gekoppelt ist,
   und
e) der Kolben und das Gehäuse im Hochspannungssystem angeordnet und vom Medium, mit dem das Hochspannungssystem gefüllt ist, umgeben sind.

Es ist ein Vorteil des erfindungsgemäßen Hochspannungssystems, dass eine Komponente des mit einem viskosen Medium gefüllten Hochspannungssystems, z.B. ein Transformator, mittels mindestens einer Feder und durch ein ein- und ausströmendes Medium gedämpft wird. Insbesondere kann die Komponente im Hochspannungssystem angeordnet sein. Es kann erfindungsgemäß ein viskoses Medium, das erfindungsgemäß im Hochspannungssystem vorhanden ist, für eine hydraulische Dämpfung genutzt werden. Beispielsweise kann ein Transformatorkessel bereits mit Öl gefüllt sein, so dass erfindungsgemäß insbesondere kein zusätzliches Medium verwendet wird. Bei Belastungen, durch z.B. Schwingungen, auf die Komponente kann der Kolben in das Gehäuse hinein gedrückt werden und die Feder kann elastisch verformt werden, so dass sich ein Innenvolumen im Gehäuse verringert, und das Medium aus dem Gehäuse strömen kann. Die mindestens eine Feder kann das zweite Endstück des, beispielsweise zylindrischen, Kolbens mit einer Innenwand des Gehäuses in Bewegungsrichtung koppeln. Bei einer gegenläufigen Bewegung des Kolbens und des Gehäuses kann das Medium in das Gehäuse hinein oder aus diesem hinaus strömen, d.h. das Volumen im Gehäuse kann verändert werden. Die Kombination aus der Fluiddynamik des Mediums und der Dämpfungseigenschaften der Feder kann bewirken, dass eine Komponente in einem Hochspannungssystem sicher gelagert werden kann, da z.B. Stöße abgefedert werden können. Insbesondere können mittels der Vorrichtung Eigenspannung, z.B. aufgrund von thermischen Materialverformungen, ausgeglichen werden. Es kann die Vorrichtung derart im Hochspannungssystem und an einer Komponente des Hochspannungssystems implementiert sein, dass auftretende Schwingungen der Komponente abgeschwächt werden. Die Vorrichtung kann vorzugsweise aus elektrisch isolierendem Material gefertigt sein. Die Vorrichtung kann beispielsweise auch eine Schwingung zweier Komponenten gegeneinander abschwächen, wenn der Kolben mit der einen und das Gehäuse mit der anderen Komponente gekoppelt ist.

Unter "gekoppelt" kann im Rahmen der Erfindung beispielsweise miteinander verschweißt, vernietet, befestigt, fest verbunden, verklebt, zusammen gesteckt, verschraubt oder vernagelt verstanden werden.

In einer vorteilhaften Ausführungsform des Hochspannungssystems kann eine Außenwand des Gehäuses mit einer Stützstruktur des Hochspannungssystems gekoppelt sein.

Vorzugsweise kann die Vorrichtung mit einer Stützstruktur, z.B. ein Gerüst oder eine Halterung, die eine Komponente stützt, oder eine Innenwand, des Hochspannungssystems gekoppelt, wie z.B. fest verbunden, sein. Damit können Eigenschwingungen einer Komponente effizient gedämpft werden.

In einer weiteren, vorteilhaften Ausführungsform kann der Kolben und/oder das Gehäuse abhängig von einer Eigenschaft der Komponente des Hochspannungssystems und/oder einer Eigenschaft des Hochspannungssystems und/oder von der Umgebung des Hochspannungssystems und/oder von Bedingungen eines Transports oder einer Lagerung des Hochspannungssystems ausgestaltet sein.

Eine Ausgestaltung, wie z.B. eine Form und/oder ein Material und/oder eine Größe, des Kolbens und/oder des Gehäuses kann insbesondere derart ausgebildet sein, dass beispielsweise hohe Schwing- oder Stoßbelastungen auf die Komponente im Betrieb des Hochspannungssystems ausgeglichen werden können. Des Weiteren können beispielsweise ein Design eines Kolbens und/oder Gehäuses an Eigenschaften einer zu dämpfenden Komponente oder einer Eigenschaft des Hochspannungssystems, z.B. erwarteter Belastungen aufgrund äußerer Einflüsse, angepasst werden. Insbesondere kann eine Eigenschaft als ein Datensatz vorliegen.

In einer weiteren, vorteilhaften Ausführungsform kann das viskose Medium als eine isolierende Flüssigkeit ausgebildet sein.

Komponenten des Hochspannungssystems sind beispielsweise von einer Isolationsflüssigkeit umgeben. Vorzugsweise kann für die Dämpfung einer Schwingung und/oder dem Ausgleich einer Materialspannung einer Komponente des Hochspannungssystems mittels der Vorrichtung eine bereits vorhandene elektrisch isolierende Flüssigkeit des Hochspannungssystems, z.B. Öl, genutzt werden.

In einer weiteren, vorteilhaften Ausführungsform des Hochspannungssystems kann das zweite Endstück des Kolbens einen Spalt mit einem vorgegebenen Mindestspaltabstand zu mindestens einer Innenwand des Gehäuses aufweisen.

Ein Ausgleich von Schwingungen und/oder Materialspannungsbelastungen kann insbesondere durch eine Dämpfung aufgrund einer Verdrängung der Flüssigkeit durch Bewegen des Kolbens erzielt werden. Vorzugsweise ist das zweite Endstück des Kolbens derart ausgebildet, dass es vom Gehäuse eingefasst, z.B. umschlossen oder umfasst oder eingerahmt, ist und dabei zwischen Kolbenaußenwand und mindestens einer Innenwand des Gehäuses ein Abstand besteht. Dies kann einen Fluss des Mediums bei entgegen gerichteter Bewegung des Kolbens und des Gehäuses ermöglichen. Vorzugsweise kann durch einen angepassten Mindestabstand ein vorgegebenes, eintauchabhängiges Dämpfungsverhalten erzielt werden.

In einer weiteren, vorteilhaften Ausführungsform des Hochspannungssystems kann der Mindestspaltabstand abhängig von vorgegebenen Fertigungstoleranzen der Komponente des Hochspannungssystems und/oder des Hochspannungssystems ausgebildet sein.

Abhängig von einem vorgegebenen Mindestabstand kann eine erwünschte Dämpfung erzielt werden. Für Komponenten mit vorgegebenen Fertigungstoleranzen, d.h. beispielsweise Unsicherheiten in der Größe einer Komponente, kann der Mindestabstand so gewählt werden, dass beispielsweise eine thermische Ausdehnung ausgeglichen werden kann.

In einer weiteren, vorteilhaften Ausführungsform des Hochspannungssystems kann mindestens eine Wand des Gehäuses mindestens einen Durchlass für eine Strömung des Mediums in das Gehäuse hinein oder aus dem Gehäuse hinaus aufweisen.

Durch eine Änderung des Strömungsquerschnitts des Mediums kann der Kolben ausgebremst werden. Um die Strömungsdynamik des Mediums vorzugsweise so zu verändern, dass die Dämpfungseigenschaften der Vorrichtung verbessert werden, können beispielsweise Löcher oder Spalten in einer Gehäusewand eingebracht werden.

In einer weiteren, vorteilhaften Ausführungsform des Hochspannungssystems kann das zweite Endstück des Kolbens mindestens eine Aussparung aufweisen.

Vorzugsweise kann das zweite Endstück des Kolbens, welches zumindest teilweise vom Gehäuse eingefasst ist, an mindestens einer Außenseite eine Aussparung umfassen, welche die Fluiddynamik des Mediums bei gegenläufiger Bewegung des Kolbens und des Gehäuses verändern. Insbesondere können die Aussparungen für eine Strömung des Mediums in Achsrichtung in das Gehäuse hinein oder aus dem Gehäuse hinaus angeordnet sein. Beispielsweise kann eine Aussparung eine Vertiefung, eine Rille, eine Aushöhlung, ein Hohlraum, eine Bohrung oder eine Lücke sein. Der Kolben kann beispielsweise auch innen hohl oder teilweise hohl ausgebildet sein.

In einer weiteren, vorteilhaften Ausführungsform des Hochspannungssystems kann mindestens eine Innenwand des Gehäuses mindestens eine Aussparung aufweisen.

Vorzugsweise kann das Gehäuse an einer Innenseite Aussparungen umfassen, die eine Strömung des Mediums in das Gehäuse hinein oder aus diesem hinaus bei einer gegenläufigen Bewegung des Kolbens und des Gehäuses derart verändert, dass ein optimaler oder vorgegebener Ausgleich einer Schwingung und/oder Materialspannung erreicht werden kann.

In einer weiteren, vorteilhaften Ausführungsform des Hochspannungssystems können bei der Vorrichtung eine Anzahl und/oder Ausgestaltung und/oder Position einer Aussparung oder eines Durchlasses abhängig von einer vorgegebenen Eigenschaft des Hochspannungssystems und/oder von der Umgebung des Hochspannungssystems und/oder von Bedingungen eines Transports oder einer Lagerung des Hochspannungssystems gewählt sein.

Vorzugsweise kann eine Aussparung oder ein Durchlass derart ausgebildet sein, dass ein optimaler oder verbesserter Ausgleich einer Schwingung und/oder einer Materialspannung erreicht werden kann. Es kann beispielsweise durch eine Variation der Anzahl und/oder Ausgestaltung und/oder Position einer Aussparung oder eines Durchlasses ein eintauchabhängiges Dämpfungsverhalten erzielt werden.

In einer weiteren, vorteilhaften Ausführungsform des Hochspannungssystems kann eine Federkonstante der mindestens einen Feder derart ausgebildet sein, abhängig von einer Eigenschaft der Komponente des Hochspannungssystems und/oder einer Eigenschaft des Hochspannungssystems und/oder von der Umgebung des Hochspannungssystems und/oder von Bedingungen eines Transports oder einer Lagerung des Hochspannungssystems eine Schwingung und/oder eine Materialspannung der Komponente auszugleichen.

Beispielsweise kann eine Eigenschaft eine physikalische Größe sein. Beispielsweise kann abhängig vom Gewicht einer Komponente und/oder einer Umgebungstemperatur des Hochspannungssystems und eines vorgegebenen Dämpfungsgrads eine optimale Federkonstante ermittelt und diese implementiert werden.

In einer weiteren, vorteilhaften Ausführungsform des Hochspannungssystems kann die mindestens eine Feder als Schraubenfeder, Tellerfeder, Pufferfeder und/oder Ringfeder ausgebildet sein.

Abhängig von der Form und des Gewichts einer Komponente des Hochspannungssystems kann ein Design einer Feder für die Dämpfung der Komponente genutzt werden.

In einer weiteren, vorteilhaften Ausführungsform des Hochspannungssystems kann die mindestens eine Feder zumindest teilweise aus glasfaserverstärktem Kunststoff gefertigt sein.

Insbesondere für Hochspannungskomponente werden vorteilhaft, elektrisch isolierende und korrosionsbeständige Materialen verwendet. Vorzugsweise kann in der Vorrichtung Federn aus glasfaserverstärktem Kunststoff genutzt werden.

Ein weiterer Aspekt der Erfindung betrifft ein Verfahren zum rechnergestützten Konstruieren eines erfindungsgemäßen Hochspannungssystems, wobei
a) ein Simulationsmodell der Vorrichtung bereitgestellt wird,
b) die Viskosität des viskosen Mediums, mit dem das Hochspannungssystem gefüllt ist, als ein erster Eingabeparameter für die Simulation eingelesen wird,
c) Eigenschaften des Hochspannungssystems und/oder der Komponente des Hochspannungssystems als Randbedingungen der Simulation eingelesen werden,
d) eine rechnergestützte Simulation der Strömungsmechanik des viskosen Mediums durchgeführt wird
   und
e) ein Simulationsergebnis zur Konstruktion der Vorrichtung ausgegeben wird.

Die Erfindung umfasst des Weiteren ein Computerprogrammprodukt, das direkt in einen programmierbaren Computer ladbar ist, umfassend Programmcodeteile, die dazu geeignet sind, die Schritte des Simulationsverfahrens durchzuführen.

Beispielsweise kann eine Ausgestaltung, wie z.B. Form, und/oder eine Position der Vorrichtung mittels einer Simulation der Strömungsdynamik des Mediums in der Vorrichtung und in deren Umgebung im Hochspannungssystem ermittelt werden.

Ausführungsbeispiele des erfindungsgemäßen Hochspannungssystems sind in den Zeichnungen beispielhaft dargestellt und werden anhand der nachfolgenden Beschreibung näher erläutert. Es zeigen:
- Fig. 1A und 1B: eine schematische Darstellung der Vorrichtung eines erfindungsgemäßen Hochspannungssystems;
- Fig. 2A und 2B: weitere schematische Darstellungen zweier Ausführungsbeispiele der Vorrichtung;
- Fig. 3: eine weitere schematische Darstellung der Vorrichtung.

Einander entsprechende Gegenstände sind in allen Figuren mit den gleichen Bezugszeichen versehen.

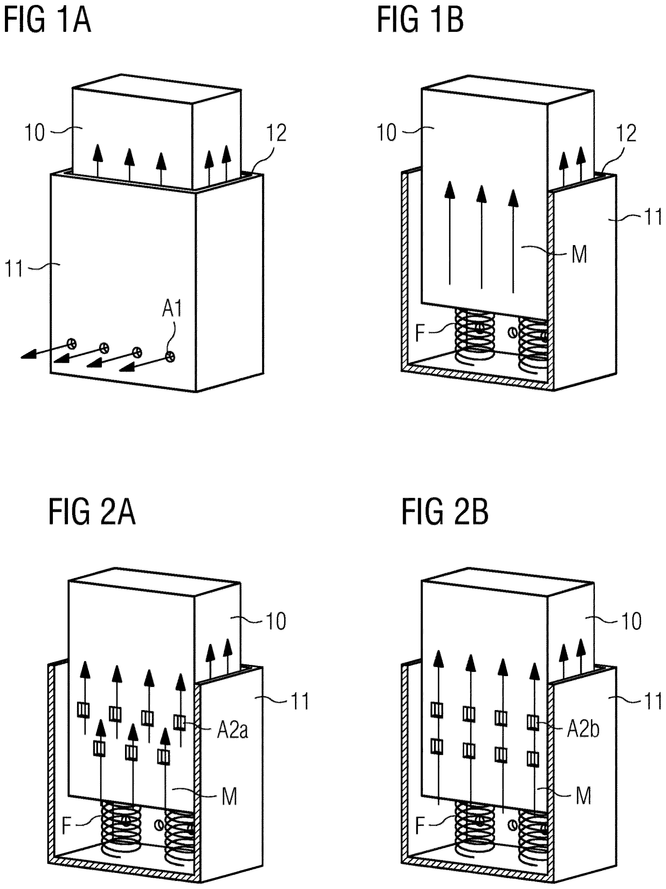

Figur 1A zeigt die Außenansicht und Figur 1B zeigt einen Querschnitt und Innenansicht einer ersten Ausführungsform einer Vorrichtung des erfindungsgemäßen Hochspannungssystems, umfassend ein Gehäuse 11 und einen Kolben 10, jeweils in schematischer Darstellung. Das Gehäuse 11 fasst insbesondere ein Endstück des Kolbens 10 ein, d.h. umrahmt, umfasst oder ummantelt den Kolben 10. Die Vorrichtung ist als Teil des Hochspannungssystems zu verstehen, wobei der Kolben 10 insbesondere mit einer zu dämpfenden Komponente des Hochspannungssystems und das Gehäuse 11 mit einer Stützstruktur des Hochspannungssystems verbunden ist, wie z.B. fest verschweißt. Das Hochspannungssystem ist mit einem viskosen Medium M gefüllt, welches insbesondere den Kolben 10 und das Gehäuse 11 umgibt. Der Kolben 10 und das Gehäuse 11 können insbesondere gegeneinander bewegt werden, wobei sich mindestens ein Endstück des Kolbens 10 im Gehäuse 11 befindet. Das Gehäuse 11 ist insbesondere hohl und derart ausgebildet, dass es das zweite Endstück des Kolbens 10 umschließen kann. Der Durchmesser senkrecht zur Achsrichtung des Kolbens 10 ist höchstens gleich dem Innendurchmesser des Gehäuses. Insbesondere ist dieser Durchmesser geringer, so dass ein Spalt 12 mit einem Mindestspaltabstand zwischen dem Kolben 10 und mindestens einer Innenwand des Gehäuses 11 vorliegt. Das Gehäuse 11 und/oder der Kolben 10 können insbesondere einen rechteckigen, eckigen, runden oder ovalen Querschnitt aufweisen.

Die Vorrichtung kann beispielsweise in einem Transformator als Hochspannungssystem angeordnet sein, wobei die Vorrichtung dazu dient, Schwingungs- und/oder Spannungsbelastungen, z.B. während eines Transports, auf eine Komponente des Transformators zu reduzieren. Die einzelnen Komponenten eines Hochspannungssystems, wie z.B. ein Transformator, sind von einem isolierenden Medium M, insbesondere einer elektrisch isolierenden Flüssigkeit, umgeben. Erfindungsgemäß wird das im Hochspannungssystem befindliche Medium M in der Vorrichtung zur Dämpfung von Schwingungen und/oder Ausgleichen von Materialspannungen genutzt.

Eine Ausgestaltung, insbesondere eine Form und/oder ein Material und/oder eine Größe, des Kolbens 10 und/oder des Gehäuses 11 kann abhängig von einer vorgegebenen Eigenschaft des Hochspannungssystems, die z.B. als Datensatz vorliegen kann, und/oder von der Umgebung des Hochspannungssystems und/oder von Bedingungen eines Transports oder einer Lagerung des Hochspannungssystems gewählt werden. Beispielsweise kann die Ausgestaltung der Vorrichtung mittels einer Simulation der Fluiddynamik des Mediums M in der Vorrichtung ermittelt werden. Eine vorgegebene Eigenschaft kann beispielsweise ein Systemtyp sein. Eine Umgebung des Hochspannungssystems kann beispielsweise hohe Temperaturschwankungen aufweisen, so dass die Ausgestaltung der Vorrichtung entsprechend gewählt werden kann, um eine thermische Ausdehnung einer Komponente auszugleichen. Ein Transport kann beispielsweise über unebenes Gelände erfolgen. Eine Lagerung kann beispielsweise auf einer Bohrplattform sein.

Der Kolben 10 und das Gehäuse 11 können gegeneinander, beispielsweise in Richtung ihrer Längsachse, bewegt werden. Das erste Endstück des Kolbens 10 kann mit einer Komponente des Hochspannungssystems gekoppelt sein. Das zweite Endstück des Kolbens 10 kann vom Gehäuse 11 umschlossen und mit diesem über mindestens eine Feder F gekoppelt sein.

Eine Feder F kann beispielsweise als Schraubenfeder, Tellerfeder, Pufferfeder und/oder Ringfeder ausgebildet sein. Insbesondere kann eine Feder aus isolierendem, glasfaserverstärktem Kunststoff gefertigt sein.

Zwischen dem zweiten Endstück des Kolbens 10 und mindestens einer Innenwand des Gehäuses 11 kann ein Spalt 12 mit Mindestspaltabstand eingerichtet sein, so dass das Medium M, z.B. Öl, in das Gehäuse 11 hinein und/oder aus dem Gehäuse 11 hinaus fließen kann. Ein Mindestspaltabstand kann so gewählt werden, dass mit der Vorrichtung beispielsweise eine thermische Ausdehnung einer Komponente ausgeglichen werden kann. Insbesondere kann ein Mindestspaltabstand abhängig von vorgegebenen Fertigungstoleranzen der Komponente sein.

Beispielsweise kann das Gehäuse 11 zur Veränderung der Fluiddynamik mindestens einen Durchlass A1, wie z.B. ein Bohrloch, umfassen, durch den das Medium M aus dem Gehäuse 11 heraus und in das Gehäuse 11 hinein strömen kann. Eine Anzahl und/oder eine Ausgestaltung und/oder eine Position des Durchlasses A1 kann insbesondere abhängig von einer vorgegebenen Eigenschaft des Hochspannungssystems und/oder von der Umgebung des Hochspannungssystems und/oder von Bedingungen eines Transports oder einer Lagerung des Hochspannungssystems eingerichtet werden. Insbesondere kann die Anzahl und/oder Ausgestaltung und/oder Position so gewählt werden, dass eine Strömung des Mediums in das Gehäuse 11 hinein und aus diesem hinaus bei Bewegung des Kolbens 10 eine hohe, dämpfende Wirkung erzielt.

Die Figuren 2A und 2B zeigen ein erstes und ein zweites Ausführungsbeispiel einer Vorrichtung des erfindungsgemäßen Hochspannungssystems, wobei der Kolben 10 Aussparungen A2a, A2b aufweist. Die Aussparungen A2a können, wie in Figur 2A gezeigt, entlang einer Außenseite des Kolbens 10 angeordnet und gegeneinander versetzt angeordnet sein. Figur 2B zeigt Aussparungen A2b an einer Außenseite des Kolbens 10, welche übereinanderliegend entlang der Längsachse der Kolbens 10 angeordnet sind. Es können auch Aussparungen derart ausgestaltet sein, dass der Kolben teilweise oder ganz hohl ausgebildet ist (nicht dargestellt).

Die Anordnung einzelner Aussparungen A2a, A2b beeinflusst die Strömungsdynamik im Gehäuse. Vorzugsweise kann die Anordnung und Ausgestaltung derart gewählt werden, dass eine Strömung bei gegenläufiger Bewegung des Kolbens 10 und des Gehäuses 11 eine optimale Dämpfung ermöglicht. Die Anzahl und/oder Ausgestaltung und/oder Position einer Aussparung A2a, A2b kann beispielsweise abhängig von der Umgebung des Hochspannungssystems, wie z.B. der Lage oder der Umgebungstemperatur gewählt werden. Des Weiteren kann ein Design der Aussparungen A2a, A2b abhängig von einer vorgegebenen Eigenschaft des Hochspannungssystems und/oder von Bedingungen eines Transports oder einer Lagerung des Hochspannungssystems gewählt werden.

Es kann eine Federkonstante der mindestens einen Feder F, die den Kolben 10 mit dem Gehäuse 11 in Bewegungsrichtung koppelt, derart abhängig von einer Eigenschaft der Komponente des Hochspannungssystems, wie z.B. Gewicht, und/oder einer Eigenschaft des Hochspannungssystems und/oder von der Umgebung des Hochspannungssystems und/oder von Bedingungen eines Transports oder einer Lagerung des Hochspannungssystems gewählt werden, dass eine optimale Dämpfung erzielt werden kann.

Die Strömungsdynamik und die Federkonstante können den Grad einer Schwingungsdämpfung und/oder des Ausgleichs der Materialspannung bestimmen. In anderen Worten, die Kombination aus einer isolierenden Flüssigkeit des Hochspannungssystems und mindestens einer Feder aus isolierendem und korrosionsbeständigem Material, wie z.B. glasfaserverstärkter Kunststoff, kann einen Ausgleich einer Schwingung und/oder Materialspannung einer Komponente in einem Hochspannungssystem ermöglichen. Vorzugsweise kann für eine optimale Ausgestaltung und Anordnung der Vorrichtung im Hochspannungssystem eine rechnergestützte Simulation durchgeführt werden.

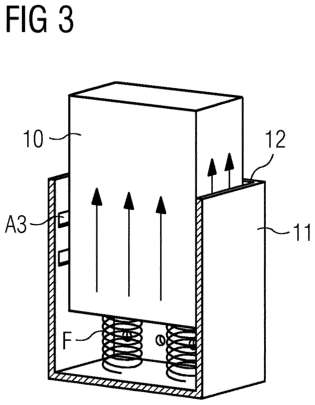

Figur 3 zeigt ein weiteres Ausführungsbeispiel einer Vorrichtung des erfindungsgemäßen Hochspannungssystems, wobei mindestens eine Innenwand des Gehäuses mindestens eine Aussparung A3 aufweist. Das Medium M, wie z.B. eine isolierende Flüssigkeit, kann bei einer gegenläufigen Bewegung des Gehäuses 11 und des Kolbens 10 durch den Spalt 12 mit Mindestspaltabstand strömen, wobei die Aussparung A3 die Strömung vorzugsweise derart beeinflusst, dass die Kopplung der Vorrichtung mit einer Komponente des Hochspannungssystems dämpfend wirkt.

Die Vorrichtung kann insbesondere an mindestens einer Außenwand des Gehäuses 11 mit dem Hochspannungssystem gekoppelt sein. Beispielsweise kann die Unterseite des Gehäuses 11 mit einer Stützstruktur des Hochspannungssystems verbunden sein. Bei Belastungen aufgrund von Schwingungen kann die Vorrichtung damit eine Dämpfung einer Schwingung der Komponente gegenüber der Schwingung des Hochspannungssystems ermöglichen.

Die Ausgestaltung, insbesondere die Ausgestaltung eines Durchlasses A1 und/oder einer Aussparung A2a, A2b, A3, und/oder Position der Vorrichtung im Hochspannungssystem kann anhand einer rechnergestützten Simulation der Strömungsmechanik des Mediums im Hochspannungssystem ermittelt werden. Dazu kann ein Simulationsmodell der Vorrichtung bereitgestellt werden. Beispielsweise umfasst das Simulationsmodell mindestens einen Teil des Hochspannungssystems. Insbesondere werden Randbedingungen des Hochspannungssystems, wie z.B. Eigenschaften der zu dämpfende Komponente oder Umgebungsdaten, als Daten eingelesen. Die Viskosität des isolierenden Mediums kann als Eingabeparameter für die Simulation eingelesen werden. Es kann eine Simulation der Strömungsdynamik des Mediums in der Vorrichtung und in deren Umgebung ermittelt werden und daraus einen Dämpfungsgrad der Vorrichtung abgeleitet werden. Die Simulation kann beispielsweise mittels verschiedener Ausführungsformen der Vorrichtung als Simulationsmodell ausgeführt werden, um eine optimale Ausgestaltung der Vorrichtung für ein vorgegebenes Hochspannungssystem zu ermitteln.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Hochspannungssystem mit einer Vorrichtung umfassend einen Kolben (10) und ein Gehäuse (11) zum Ausgleichen einer Schwingung und/oder einer Materialspannung einer Komponente des mit einem viskosen Medium gefüllten Hochspannungssystems, wobei
a) ein erstes Endstück des Kolbens (10) mit der Komponente gekoppelt ist,
b) ein zweites Endstück des Kolbens (10) zumindest teilweise innerhalb des Gehäuses (11) angeordnet und von diesem eingefasst ist,
c) der Kolben (10) und das Gehäuse (11) entlang einer Achse gegenläufig bewegbar sind,
d) das zweite Endstück des Kolbens (10) mit einer Innenwand des Gehäuses (11) mittels einer Feder (F) gekoppelt ist,
und
e) der Kolben (10) und das Gehäuse (11) im Hochspannungssystem angeordnet und vom Medium (M), mit dem das Hochspannungssystem gefüllt ist, umgeben sind.

2. Hochspannungssystem nach Anspruch 1, wobei eine Außenwand des Gehäuses (11) mit einer Stützstruktur des Hochspannungssystems gekoppelt ist.

3. Hochspannungssystem nach einem der vorhergehenden Ansprüche, wobei der Kolben (10) und/oder das Gehäuse (11) abhängig von einer Eigenschaft der Komponente des Hochspannungssystems und/oder einer Eigenschaft des Hochspannungssystems und/oder von der Umgebung des Hochspannungssystems und/oder von Bedingungen eines Transports oder einer Lagerung des Hochspannungssystems ausgestaltet ist.

4. Hochspannungssystem nach einem der vorhergehenden Ansprüche, wobei das viskose Medium (M) als eine isolierende Flüssigkeit ausgebildet ist.

5. Hochspannungssystem nach einem der vorhergehenden Ansprüche, wobei das zweite Endstück des Kolbens (10) einen Spalt (12) mit einem vorgegebenen Mindestspaltabstand zu mindestens einer Innenwand des Gehäuses (11) aufweist.

6. Hochspannungssystem nach Anspruch 5, wobei der Mindestspaltabstand abhängig von vorgegebenen Fertigungstoleranzen der Komponente des Hochspannungssystems und/oder des Hochspannungssystems ausgebildet ist.

7. Hochspannungssystem nach einem der vorhergehenden Ansprüche, wobei mindestens eine Wand des Gehäuses (11) mindestens einen Durchlass (A1) für eine Strömung des Mediums (M) in das Gehäuse (11) hinein oder aus dem Gehäuse (11) hinaus aufweist.

8. Hochspannungssystem nach einem der vorhergehenden Ansprüche, wobei das zweite Endstück des Kolbens (10) mindestens eine Aussparung (A2a, A2b) aufweist.

9. Hochspannungssystem nach einem der vorhergehenden Ansprüche, wobei mindestens eine Innenwand des Gehäuses (11) mindestens eine Aussparung (A3) aufweist.

10. Hochspannungssystem nach einem der vorhergehenden Ansprüche, wobei bei der Vorrichtung eine Anzahl und/oder Ausgestaltung und/oder Position einer Aussparung (A2a, A2b, A3) oder eines Durchlasses (A1) abhängig von einer vorgegebenen Eigenschaft des Hochspannungssystems und/oder von der Umgebung des Hochspannungssystems und/oder von Bedingungen eines Transports oder einer Lagerung des Hochspannungssystems ausgebildet sind.

11. Hochspannungssystem nach einem der vorhergehenden Ansprüche, wobei eine Federkonstante der mindestens einen Feder (F) derart ausgebildet ist, abhängig von einer Eigenschaft der Komponente des Hochspannungssystems und/oder einer Eigenschaft des Hochspannungssystems und/oder von der Umgebung des Hochspannungssystems und/oder von Bedingungen eines Transports oder einer Lagerung des Hochspannungssystems eine Schwingung und/oder eine Materialspannung der Komponente auszugleichen.

12. Hochspannungssystem nach einem der vorhergehenden Ansprüche, wobei die mindestens eine Feder (F) als Schraubenfeder, Tellerfeder, Pufferfeder und/oder Ringfeder ausgebildet ist.

13. Hochspannungssystem nach einem der vorhergehenden Ansprüche, wobei die mindestens eine Feder (F) zumindest teilweise aus glasfaserverstärktem Kunststoff gefertigt ist.

14. Verfahren zum rechnergestützten Konstruieren eines Hochspannungssystems nach einem der Ansprüche 1 bis 13, wobei
a) ein Simulationsmodell der Vorrichtung bereitgestellt wird,
b) die Viskosität des viskosen Mediums (M), mit dem das Hochspannungssystem gefüllt ist, als ein erster Eingabeparameter für die Simulation eingelesen wird,
c) Eigenschaften des Hochspannungssystems und/oder der Komponente des Hochspannungssystems als Randbedingungen der Simulation eingelesen werden,
d) eine rechnergestützte Simulation der Strömungsmechanik des viskosen Mediums (M) durchgeführt wird
und
e) ein Simulationsergebnis zur Konstruktion der Vorrichtung ausgegeben wird.

15. Computerprogrammprodukt, das direkt in einen programmierbaren Computer ladbar ist, umfassend Programmcodeteile, die dazu geeignet sind, die Schritte des Verfahrens nach Anspruch 14 durchzuführen.

## Claims

1. High-voltage system with a device comprising a piston (10) and a housing (11) for compensating for a vibration and/or a material stress of a component of the high-voltage system filled with a viscous medium, wherein
a) a first end piece of the piston (10) is coupled to the component,
b) a second end piece of the piston (10) is arranged at least partly within the housing (11) and is enclosed by it,
c) the piston (10) and the housing (11) can be moved in opposite directions along an axis,
d) the second end piece of the piston (10) is coupled to an inner wall of the housing (11) by means of a spring (F), and
e) the piston (10) and the housing (11) are arranged in the high-voltage system and surrounded by the medium (M) with which the high-voltage system is filled.

2. High-voltage system according to Claim 1, wherein an outer wall of the housing (11) is coupled to a supporting structure of the high-voltage system.

3. High-voltage system according to one of the preceding claims, wherein the piston (10) and/or the housing (11) are configured depending on a property of the component of the high-voltage system and/or a property of the high-voltage system and/or on the surroundings of the high-voltage system and/or on conditions of transport or mounting of the high-voltage system.

4. High-voltage system according to one of the preceding claims, wherein the viscous medium (M) is in the form of an insulating liquid.

5. High-voltage system according to one of the preceding claims, wherein the second end piece of the piston (10) has a gap (12) with a specified minimum gap distance in relation to at least one inner wall of the housing (11).

6. High-voltage system according to Claim 5, wherein the minimum gap distance is formed depending on specified manufacturing tolerances of the component of the high-voltage system and/or of the high-voltage system.

7. High-voltage system according to one of the preceding claims, wherein at least one wall of the housing (11) has at least one passage (A1) for a flow of the medium (M) into the housing (11) or out of the housing (11).

8. High-voltage system according to one of the preceding claims, wherein the second end piece of the piston (10) has at least one clearance (A2a, A2b).

9. High-voltage system according to one of the preceding claims, wherein at least one inner wall of the housing (11) has at least one clearance (A3).

10. High-voltage system according to one of the preceding claims, wherein, in the device, a number and/or configuration and/or position of a clearance (A2a, A2b, A3) or a passage (A1) are/is formed depending on a specified property of the high-voltage system and/or on the surroundings of the high-voltage system and/or on conditions of transport or mounting of the high-voltage system.

11. High-voltage system according to one of the preceding claims, wherein a spring constant of the at least one spring (F) is formed in such a way as to compensate for a vibration and/or a material stress of the component depending on a property of the component of the high-voltage system and/or a property of the high-voltage system and/or on the surroundings of the high-voltage system and/or on conditions of transport or mounting of the high-voltage system.

12. High-voltage system according to one of the preceding claims, wherein the at least one spring (F) is in the form of a helical spring, cup spring, buffer spring and/or annular spring.

13. High-voltage system according to one of the preceding claims, wherein the at least one spring (F) is manufactured at least partly from glass-fibre-reinforced plastic.

14. Method for the computer-aided structural design of a high-voltage system according to one of Claims 1 to 13, wherein
a) a simulation model of the device is provided,
b) the viscosity of the viscous medium (M) with which the high-voltage system is filled is read in as a first input parameter for the simulation,
c) properties of the high-voltage system and/or the component of the high-voltage system are read in as boundary conditions of the simulation,
d) a computer-aided simulation of the flow mechanics of the viscous medium (M) is carried out and
e) a simulation result for the structural design of the device is output.

15. Computer program product which can be loaded directly into a programmable computer, comprising program code parts that are suitable for carrying out the steps of the method according to Claim 14.

## Revendications

1. Système à haute tension ayant un dispositif comprenant un piston (10) et une boîte (11) pour la compensation d'une vibration et/ou d'une contrainte de matériau d'un composant du système à haute tension rempli d'un fluide visqueux,
dans lequel
a) un premier embout du piston (10) est accouplé au composant,
b) un deuxième embout du piston (10) est disposé au moins en partie dans la boîte (11) et est enchâssé par celle-ci,
c) le piston (10) et la boîte (11) sont mobiles en sens contraire suivant un axe,
d) le deuxième embout du piston (10) est accouplé à une paroi intérieure de la boîte (11) au moyen d'un ressort (F) et
e) le piston (10) et la boîte (11) sont disposés dans le système à haute tension et sont entourés du fluide (M), dont le système à haute tension est rempli.

2. Système à haute tension suivant la revendication 1, dans lequel une paroi extérieure de la boîte (11) est accouplée à une structure d'appui du système à haute tension.

3. Système à haute tension suivant l'une des revendications précédentes, dans lequel le piston (10) et/ou la boîte (11) est conformé, en fonction d'une propriété du composant du système à haute tension et/ou d'une propriété du système à haute tension et/ou de l'environnement du système à haute tension et/ou des conditions d'un transport ou d'un stockage du système à haute tension.

4. Système à haute tension suivant l'une des revendications précédentes, dans lequel le fluide (M) visqueux est constitué sous la forme d'un liquide isolant.

5. Système à haute tension suivant l'une des revendications précédentes, dans lequel le deuxième embout du piston (10) donne une fente (12) ayant une distance de fente minimum donnée à l'avance à au moins une paroi intérieure de la boîte (11).

6. Système à haute tension suivant la revendication 5, dans lequel la distance minimum de la fente est constituée en fonction de tolérances de fabrication données à l'avance du composant du système de haute tension et/ou du système de haute tension.

7. Système à haute tension suivant l'une des revendications précédentes, dans lequel au moins une paroi de la boîte (11) a au moins une traversée (A1) pour que le fluide (M) s'écoule dans la boîte (11) ou sorte de la boîte (11).

8. Système à haute tension suivant l'une des revendications précédentes, dans lequel le deuxième embout du piston (10) a au moins un évidement (A2a, A2b).

9. Système à haute tension suivant l'une des revendications précédentes, dans lequel au moins une paroi intérieure de la boîte (11) a au moins un évidement (A3).

10. Système à haute tension suivant l'une des revendications précédentes, dans lequel dans le dispositif, un nombre et/ou une conformation et/ou une position d'un évidement (A2a, A2b, A3) ou d'une traversée (A1) est constitué en fonction d'une propriété donnée à l'avance du système à haute tension et/ou de l'environnement du système à haute tension et/ou de conditions d'un transport ou d'un stockage du système à haute tension.

11. Système à haute tension suivant l'une des revendications précédentes, dans lequel une constante élastique du au moins un ressort (F) est constituée, de manière à compenser une vibration et/ou une contrainte de matériau, en fonction d'une propriété du composant du système à haute tension et/ou d'une propriété du système à haute tension et/ou de l'environnement du système à haute tension et/ou de conditions d'un transport ou d'un stockage du système à haute tension.

12. Système à haute tension suivant l'une des revendications précédentes, dans lequel le au moins un ressort (F) est un ressort hélicoïdal, un ressort à disque, un ressort tampon et/ou un ressort bague.

13. Système à haute tension suivant l'une des revendications précédentes, dans lequel le au moins un ressort (F) est fabriqué au moins en partie en une matière plastique renforcée par de la fibre de verre.

14. Procédé de construction assistée par ordinateur d'un système à haute tension suivant l'une des revendications 1 à 13, dans lequel
a) on se procure un modèle de simulation du dispositif,
b) on entre, comme premier paramètre d'entrée pour la simulation, la viscosité du fluide (M) visqueux, dont le système à haute tension est rempli,
c) on entre des propriétés du système à haute tension et/ou du composant du système à haute tension comme conditions aux limites de la simulation,
d) on effectue une simulation assistée par ordinateur de la mécanique des fluides du fluide (M) visqueux
et
e) on sort un résultat de simulation pour la construction du dispositif.

15. Produit de programme d'ordinateur, qui peut être chargé directement dans un ordinateur programmable, comprenant des parties de code de programme, qui sont propres à exécuter les stades du procédé suivant la revendication 14.
